# EUROPÄISCHE PATENTSCHRIFT

(11) **EP 2 122 812 B1**
(45) Veröffentlichungstag und Bekanntmachung des Hinweises auf die Patenterteilung: **10.04.2019**
(21) Anmeldenummer: 08707650.1
(22) Anmeldetag: 11.02.2008
(51) Int. Cl.: H02K 41/03, H02K 1/18, H02K 1/27, H02K 3/52, H02K 5/22, H02K 7/08, H02K 5/20

(54) **LINEARAKTOR**
LINEAR ACTUATOR
ACTIONNEUR LINÉAIRE

(30) Priorität: 12.02.2007 DE 102007007398
(43) Veröffentlichungstag der Anmeldung: 25.11.2009
(73) Patentinhaber: SEW-EURODRIVE GmbH & Co. KG, 76646 Bruchsal (DE)
(72) Erfinder: SCHMIDT, Josef, 76676 Graben-Neudorf (DE); SIMON, Olaf, 76646 Bruchsal (DE); DITTES, Gerhard, 75053 Gondelsheim (DE); OBERBICHLER, Pepi, 79872 Bernau (DE)
(74) Vertreter: Tüngler, Eberhard
(86) Internationale Anmeldenummer: PCT/EP2008/001016
(87) Internationale Veröffentlichungsnummer: WO 2008/098723

(56) Entgegenhaltungen:
- WO-A-2004/008613
- DE-A1- 10 062 823
- DE-A1- 19 604 645
- JP-A- 2001 211 632
- JP-A- 2003 244 929
- JP-A- 2005 039 941
- US-A1- 2004 263 001

## Beschreibung

Die Erfindung betrifft einen Linearaktor.

Aus der DE 100 62 823 A1 ist ein Tauchspulenmotor als Elektrozylinder bekannt. Dabei weist dieser als Synchron-Linear-Aktor ausgeführt Motor eine mit Drehstrom beschickbare Wicklung auf.

Aus der US 2004 0263001 A1 ist ein Linearaktor bekannt
umfassend Stator und Läufer,
wobei der Läufer Magnete umfasst, deren Magnetisierungsrichtung im Wesentlichen in axialer Richtung ausgerichtet ist,
wobei der Stator mindestens ein Modul umfasst,
wobei jedes Modul eine auf einem Spulenkörper aufgebrachte Wicklung umfasst, mit der im Wesentlichen ein axial gerichtetes Magnetfeld erzeugbar ist,
wobei der Stator ein Profil umfasst,
wobei die äußere oder innere Oberfläche des Profils zusammen mit dem Spulenkörper derart geformt ist, dass axial sich erstreckende Hohlräume gebildet sind,
wobei der Spulenkörper in Umfangsrichtung verlaufende Vertiefungen aufweist, in welche die jeweiligen Teile der Wicklungen eingelegt sind,
wobei die in einer jeweiligen Vertiefung vorgesehenen axial zueinander benachbarten Teilwicklungen mittels des Spulenkörpers voneinander beabstandet sind.

Der Erfindung liegt daher die Aufgabe zugrunde, einen Linearaktor weiterzubilden, wobei lineare Antriebsfunktion in kostengünstiger Weise erzeugbar sein soll
Erfindungsgemäß wird die Aufgabe bei dem Linearaktor nach den in Anspruch 1 angegebenen Merkmalen gelöst.

Wesentliche Merkmale der Erfindung bei dem Linearaktor sind, dass der Linearaktor Stator und Läufer umfasst,
wobei der Läufer Magnete umfasst, deren Magnetisierungsrichtung im Wesentlichen in axialer Richtung ausgerichtet ist, wobei ein Schrägungswinkel vorgesehen ist,
wobei der Schrägungswinkel einen Wert zwischen Null und 30° aufweist,
wobei der Stator mindestens ein Modul umfasst,
wobei jedes Modul eine auf einem Spulenkörper aufgebrachte Wicklung umfasst, mit der im Wesentlichen ein axial gerichtetes Magnetfeld erzeugbar ist, insbesondere im Bereich der Magnete,
wobei der Stator ein Stranggussprofil umfasst, welches Ausnehmungen zur Durchleitung von Kühlmedium umfasst,
wobei die äußere oder innere Oberfläche des Stranggussprofils zusammen mit dem Spulenkörper derart geformt ist, dass axial sich erstreckende Hohlräume gebildet sind, insbesondere zur Durchleitung von Leitungen,
wobei der Spulenkörper aus Stahl gefertigt ist und in Umfangsrichtung verlaufende Vertiefungen aufweist, in welche die Statorwicklungsdrähte und/oder jeweiligen Teile der Wicklungen eingelegt sind,
wobei die in einer jeweiligen Vertiefung vorgesehenen axial zueinander benachbarten Teilwicklungen mittels des Spulenkörpers voneinander beabstandet sind,
wobei der Spulenkörper einstückig aus Stahl gefertigt ist
wobei die Magnete aus mehreren in axialer Richtung hintereinander angeordneten Stücken gefertigt sind, die mit einem jeweiligen Versatz zueinander in Umfangsrichtung angeordnet sind zur Verringerung des Polrastens,
wobei im Stranggussprofil eine Lanze zur Durchleitung eines Mediums durch den Stator an eine nachgeordnete Vorrichtung vorgesehen ist.

Von Vorteil ist dabei, dass mittels der durch bloße Ausformung kostengünstig bildbaren Hohlräume Leitungen durchführbar sind, beispielsweise zur Versorgung oder zur Sensorsignaldurchleitung nachfolgender Module. Durch Verwendung des Stranggussprofils sind aber auch beim Stranggießen selbst schon Ausnehmungen zur Durchleitung des Kühlmediums, wie beispielsweise Wasser, Öl, Flüssigstickstoff oder Luft, vorsehbar in kostengünstiger Weise. Eine Nachbearbeitung ist nicht erforderlich. Stirnseitig angebrachte Flansche werden dabei mit Anschlussvorrichtungen für die Einleitung oder Herausführung des Kühlmediums, elektrischen Versorgungsleitungen, Sensor-Signalleitungen und/oder einer Lanze vorgesehen. Bei Verwendung von Luft ist es sogar ermöglicht diese in allen Ausnehmungen in derselben axialen Richtung durchströmen zu lassen und somit an einer Stirnseite verschließende Vorrichtungen für die Ausnehmungen einzusparen. Erfindungsgemäß ist somit im Zentrum des Stranggussprofils das Führen einer Lanze zur Versorgung des Prozesses, beispielsweise mit Luft, ermöglicht.

Der Aktor ist als Innenläufer oder Außenläufer vorsehbar.

Mittels der Anzahl der Module, dem Anschalten oder Abschalten von Modulen ist die Lauflänge, also Hub, Leistung und Kraft anpassbar an die jeweiligen Anforderungen. Dabei sind die Module derart gestaltet, dass die Leitungen der axial nachfolgende Module durchleitbar sind und ebenso das Kühlmedium. Zusätzlich sind die Magnete derart dimensionierbar, dass eine hohe Vorschubkraft mit ihnen erzeugbar ist.

Des Weiteren ist bei der Erfindung Leistung, Kraft und/oder Laufweg kostengünstig erzeugbar.

Außerdem sind die Module in Abhängigkeit der Läuferposition zu- oder abschaltbar ausführbar. Dabei ist von Vorteil, dass die Wärmeentwicklung verringert ist und damit weniger Kühlbedarf und geringerer Energieverbrauch vorhanden ist.

Bei einer vorteilhaften Ausgestaltung sind die Magnete Permanentmagnete. Von Vorteil ist dabei, dass hohe Kräfte erzeugbar sind.

Bei einer vorteilhaften Ausgestaltung sind die Magnete in Umfangsrichtung hintereinander angeordnet, insbesondere an der Innenfläche des hohl ausgeführten Läufers. Von Vorteil ist dabei, dass der Aktor als Außenläufer realisierbar ist.

Bei einer vorteilhaften Ausgestaltung ist das Stranggussprofil an der Innenfläche des Spulenkörpers mit diesem verbunden, insbesondere kraftschlüssig, stoffschlüssig und/oder formschlüssig. Von Vorteil ist dabei, dass eine zur Übertragung der Kraft genügend feste Verbindung in kostengünstiger Weise vorsehbar ist.

Bei einer vorteilhaften Ausgestaltung ist im Stranggussprofil eine Lanze zur Durchleitung eines Mediums an eine nachgeordnete Vorrichtung vorsehbar. Von Vorteil ist dabei, dass ein härteres Material als das Material für den Strangguss vorsehbar ist. Für den Strangguss ist beispielsweise Aluminium vorsehbar und für die Lanze beispielsweise Stahl. Zur Kraftübertragung ist der Läuferflansch mit dem Flansch der Last starr verbindbar.

Bei einer vorteilhaften Ausgestaltung ist der Linearaktor als mehrphasiger und/oder mehrpoliger Tauschspulenmotor, insbesondere mit im Wesentlichen konstanter Kraft über die Lauflänge, ausgeführt, insbesondere als synchroner Motor. Von Vorteil ist dabei, dass der Aktor drehstromversorgbar ist und/oder aus einem Umrichter versorgbar ist. Auf diese Weise sind Hub und Geschwindigkeit beliebig steuerbar abhängig von der vom Umrichter eingespeisten Spannung und deren Frequenz.

Bei einer vorteilhaften Ausgestaltung ist stirnseitig am Läufer ein Flansch vorgesehen zur Kraftübertragung an die Last. Von Vorteil ist dabei, dass ein Linearlager mit dem Flansch verbindbar ist, dessen bewegbarer Teil mit dem Läufer verbindbar ist. Auf diese Weise ist der Aktor mit Lager ausführbar.

Erfindungsgemäß sind die Magnete aus mehreren in axialer Richtung hintereinander angeordneten Stücken gefertigt, die mit einem jeweiligen Versatz zueinander in Umfangsrichtung angeordnet sind. Von Vorteil ist dabei, dass eine Verringerung des Polrastens ermöglicht ist.

Erfindungsgemäß weist der Schrägungswinkel einen Wert zwischen Null und 30° auf. Von Vorteil ist dabei, dass der Schrägungswinkel optimiert anpassbar ist und somit die Verringerung des Polrastens optimiert ausführbar ist.

Bei einer vorteilhaften Ausgestaltung sind die Module in axialer Richtung hintereinander angeordnet und/oder kraft- und/oder formschlüssig miteinander verbunden. Von Vorteil ist dabei, dass ein modularer Aufbau ermöglicht, die für die jeweilige Anwendung, wie beispielsweise Maschine oder Anlage, angepasste Laufweg, also Hub, Kraft und/oder Leistung zu erzeugen. Hierzu werden Module im Lager vorgehalten und somit ist ein Baukasten mit hoher Varianz und geringer Teilezahl erzeugt.

Bei einer vorteilhaften Ausgestaltung sind die Magnete gemeinsam als Hohlzylinder aus magnetisierbarem Material ausgeführt, welcher entsprechend magnetisiert ist. Von Vorteil ist dabei, dass die Fertigung schnell und mit geringem Aufwand und daher kostengünstig ausführbar ist.

Bei einer vorteilhaften Ausgestaltung sind die Ausnehmungen des Stranggussprofils beim Stranggießen erzeugt. Von Vorteil ist dabei, dass keine Nachbearbeitung notwendig ist.

Bei einer vorteilhaften Ausgestaltung ist der Spulenkörper an seiner Innenseite als Innenzylinder geformt. Von Vorteil ist dabei, dass einerseits das Stranggussprofil nach seinem Einführen oder Einpressen in den Spulenkörper mittels seiner Außenkontur die Form der Hohlräume definiert und andererseits der Innenzylinder des Spulenkörpers. Somit sind glatte Hohlräume erzeugbar, in denen die Leitungen keiner Verletzungsgefahr ausgesetzt sind.

Bei einer vorteilhaften Ausgestaltung erstrecken sich die Hohlräume und Ausnehmungen über die axiale Länge des Stranggussprofils, insbesondere zumindest auch über die axiale Länge des Stators. Von Vorteil ist dabei, dass auch weit entfernte Module versorgbar sind und die Fertigung einfach und kostengünstig ist. Außerdem ist der modulare Aufbau einfach und kostengünstig bereitstellbar.

Bei einer vorteilhaften Ausgestaltung weist der Aktor eine Schnittstelle zum Verbinden einer Transportsicherung auf. Von Vorteil ist dabei, dass trotz fehlender Lagerung des Läufers zum Stator Beschädigungen vermeidbar sind, da die Transportsicherung Läufer und Stator voneinander auf definiertem Abstand hält.

Weitere Vorteile ergeben sich aus den Unteransprüchen.

Die Erfindung wird nun anhand von Abbildungen näher erläutert:
In der Figur 1 ist für eine erfindungsgemäße Vorrichtung eine Schnittansicht gezeichnet.
In der Figur 2 ist eine Schrägansicht des Läufers und des Stators gezeigt.
In der Figur 3 ist zusätzlich ein Linearlager zur Lagerung des Läufers gezeigt.

Dabei sind an der Innenseite des hohl ausgeführten Läufers (4) Magnetpiatten vorgesehen, deren Magnetisierungsrichtung in axialer Richtung vorgesehen ist.

Der Stator weist eine Wicklung, umfassend die Teil-Wickiungen 7, auf, die um einen Spulenkörper 6 gewickelt vorgesehen ist. Der Spulenkörper ist hohl ausgeführt und weist eine Innenzylinder-Wandung auf, an der er kraftschlüssig und/oder stoffschlüssig verbunden ist mit einem Stranggussprofil 2.

Dieses Stranggussprofil 2 weist Ausnehmungen 5 auf, in welche ein Kühlmedium, wie beispielsweise Luft und/oder Wasser, durchleitbar ist zum Abtransport der Wärme aus den Wicklungen.

Das Stranggussprofil 2 ist hohl ausgeführt und weist eine Innenzylinder-Wandung auf, an der er kraftschlüssig und/oder stoffschlüssig verbindbar ist mit einer Lanze 3, die zur Durchleitung von beispielsweise Luft an eine nachgeordnete Vorrichtung vorgesehen ist. Zur Kraftübertragung wird der Läuferflansch mit der zu bewegenden Last starr verbunden.

Das Stranggussprofil 2 weist an seiner äußeren Oberfläche in axialer Richtung verlaufende Vertiefungen (41) auf, die mit der Innenfläche des Spulenkörpers 6 Hohlräume bilden. Durch diese Hohlräume sind Kabel durchführbar.

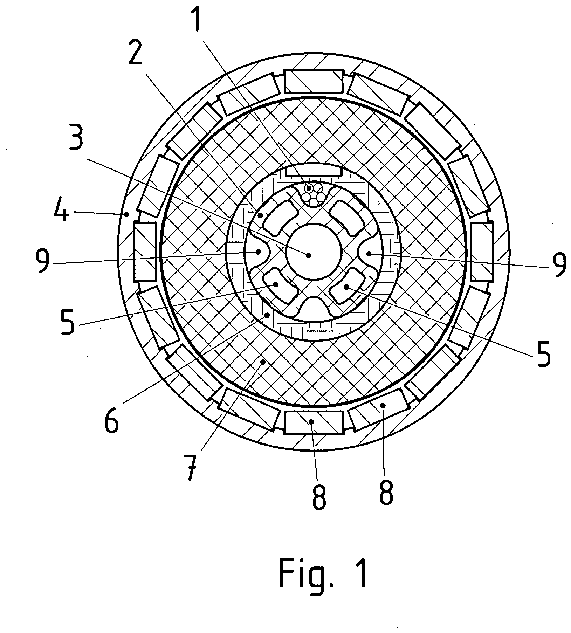

In Figur 1 sind fünf Leitungen (1) in einem Hohlraum gezeigt. Die drei Weiteren Hohlräume sind ebenfalls zur Kabeldurchführung geeignet. Die Leitungen sind einzeln oder als Kabel einlegbar. Vorzugsweise werden in einem Hohlraum drei Drehstromphasenleitungen, eine Masseleitung und eine Sensorleitung durchgeführt.

Auf diese Weise ist der gesamte Stator aus mehr als einem Modul 20 aufbaubar, wobei die Module in axialer Richtung zusammengefügt werden. Jedes Modul 20 weist dabei eine mit Drehstrom beschickbare Wicklung auf, die ein im Wesentlichen axial gerichtetes Magnetfeld erzeugt, und einen Sensor, der zur Bestimmung oder Überwachung der Temperatur der jeweiligen Wicklung vorgesehen ist. Jedes Modul umfasst also dabei mehrere TeilWicklungen 7. Bei Drehstrombestromung umfasst jedes Modul eine Anzahl von TeilWicklungen, die einem ganzzahligen Vielfachen von 3 entspricht.

Die Versorgungsleitungen und Sensorleitungen eines jeweiligen Moduls sind durch den Hohlraum des axial benachbarten vorangestellten Moduls hindurchleitbar.

Bei der Ausführung nach Figur 1 sind vom ersten Modul aus, dessen Leitungen direkt nach außen geführt sind, vier weitere axial hintereinander angeordnete Module versorgbar.

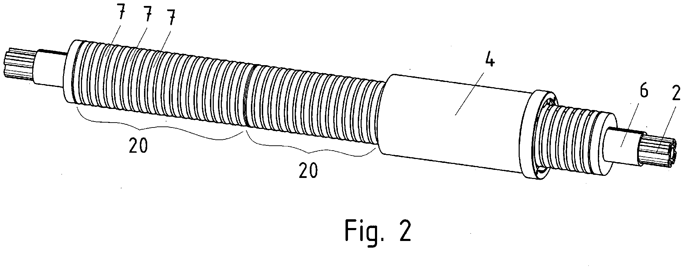

In Figur 2 ist eine Ausführungsbeispiel mit drei Modulen 20 gezeigt.

Bei weiteren erfindungsgemäßen Ausführungsbeispielen ist die Anzahl der Hohlräume größer als vier oder kleiner als vier.

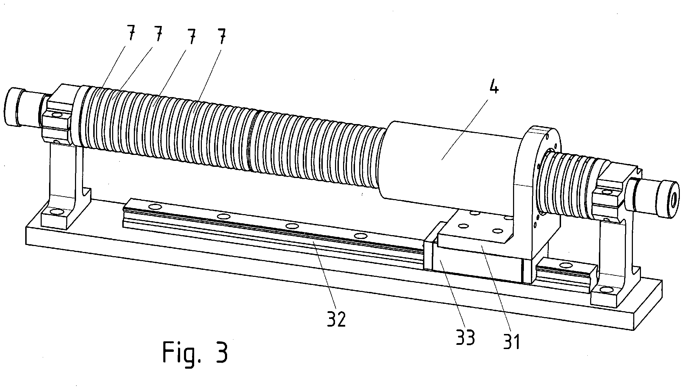

In Figur 3 ist ein weiteres erfindungsgemäßes Ausführungsbeispiel gezeigt, bei dem eine beispielhafte Linear-Lagerung des Läufers 4 vorgesehen ist. Dabei ist der Läufer 4 mit dem Verbindungsstück 31 verbunden, das mit dem Verfahrwagen 33 lösbar verbunden ist. Dieser Verfahrwagen 33 ist auf einer Schiene 32 linear verfahrbar. Der Verfahrwagen ist mit Linearlager, beispielsweise auch als Gleitlager oder als Wälzkörper umfassendes Lager, ausführbar.

Der Spulenkörper 6 ist einstückig gefertigt, vorzugsweise aus Stahl. Insbesondere sind am Spulenkörper Ringnuten zur Aufnahme der Wicklungen 7 ausgefräst, die in axialer Richtung regelmäßig voneinander beabstandet sind. Die Wicklungen 7 sind sozusagen ananasscheibenförmig ausgeformt und nach radial innen sowie beidseitig in axialer Richtung von Stahl umgeben.

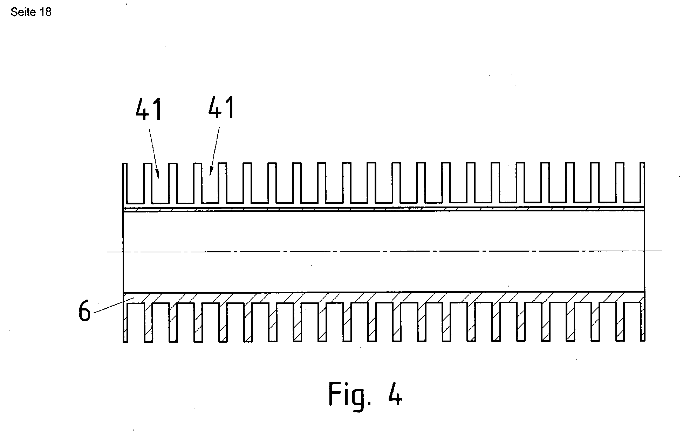

Figur 4 zeigt den Spulenkörper 6 im Querschnitt, wobei Vertiefungen 41 zum Einlegen der Statorwicklungsdrähte gezeigt sind. Diese Vertiefungen verlaufen in Umfangsrichtung des Spulenkörpers. Bei einem weiteren erfindungsgemäßen Ausführungsbeispiel verlaufen die Vertiefungen spiralförmig am äußeren Umfang des Spulenkörpers 6 in axialer Richtung.

Vorzugsweise ist also der erfindungsgemäße Linearaktor eisenbehaftet ausgeführt.

Außerdem ist durch das fast gänzliche Umgeben der Teil- Wicklungen, indem diese in Vertiefungen des aus Stahl oder Eisen vorzugsweise einstückig gefertigten Spulenkörpers 6 eingelegt sind, eine sehr gute magnetische Führung der magnetischen Feldlinien erreicht. Außerdem wird das Eisen direkt mit den durchströmten Hohlräumen, also Kühlleitungen, an seiner Innenfläche verbunden und somit eine Entwärmung verbessert. Die Statorwicklung ist also insgesamt aus Teilwicklungen 7 ausgeführt, von denen eine jede in einer jeweiligen Ringnut des Spulenkörpers 6 vorsehbar ist. Somit trägt der Spulenkörper 6 zur Stabilisierung bei.

Bei weiteren erfindungsgemäßen Ausführungsbeispielen weist die Magnetisierungsrichtung einen Schrägungswinkel von 0 bis 30° auf. Dabei ist die größere Komponente des Magnetisierungsrichtungsvektors in axialer Richtung ausgerichtet und die kleinere Komponente in Umfangsrichtung gerichtet, also tangential zu demjenigen gedachten Kreis, auf dem der Magnet angeordnet ist. Auf diese Weise ist die Polrastung verringerbar. Statt eines Schrägungswinkels ist auch eine mehrstückige Ausführung des jeweiligen Magneten vorsehbar, wobei jedes Stück eine Magnetisierungsrichtung in axialer Richtung aufweist und die Stücke zwar in axialer Richtung hintereinander aber mit zum jeweiligen Nachbarn vorhandenem Versatz in Umfangsrichtung angeordnet sind. Bei weiteren erfindungsgemäßen Ausführungsbeispielen weist die Magnetisierungsrichtung der Stücke ebenfalls einen nicht verschwindenden Schrägungswinkel auf

Bei weiteren erfindungsgemäßen Ausführungsbeispielen ist ein Hohlzylinder aus Magnetisierbarem Material vorgesehen, der statt der Magnete mit dem Läufer verbunden ist und entsprechend magnetisiert wird. Somit ist eine einfachere Fertigung realisierbar.

Bei weiteren erfindungsgemäßen Ausführungsbeispielen sind an der Innenseite des hohl ausgeführten Läufers (4) eine Anzahl n von Polpaaren von Magnetplatten vorgesehen, wobei die Anzahl n abhängig von der benötigten Kraft gewählt ist.

### Bezugszeichenliste

1 Leitungen, umfassend Drehstromleitungen und Sensorleitungen
2 Stranggussprofil
3 Lanze
4 Läufer
5 Ausnehmung für Kühlmedium
6 Spulenkörper
7 Wicklung
8 Magnetplatte
9 Hohlraum für Leitungen
20 Modul
31 Verbindungsstück
32 Schiene
33 Verfahrwagen
41 Vertiefung

## Patentansprüche

1. Linearaktor,
umfassend Stator und Läufer (4),
wobei der Läufer (4) Magnete umfasst, deren Magnetisierungsrichtung im Wesentlichen in axialer Richtung ausgerichtet ist, wobei ein Schrägungswinkel vorgesehen ist,
wobei der Schrägungswinkel einen Wert zwischen Null und 30° aufweist,
wobei der Stator mindestens ein Modul (20) umfasst, wobei jedes Modul (20) eine auf einem Spulenkörper (6) aufgebrachte Wicklung (7) umfasst, mit der im Wesentlichen ein axial gerichtetes Magnetfeld erzeugbar ist, insbesondere im Bereich der Magnete,
wobei der Stator ein Stranggussprofil (2) umfasst, welches Ausnehmungen (5) zur Durchleitung von Kühlmedium umfasst,
wobei die äußere oder innere Oberfläche des Stranggussprofils (2) zusammen mit dem Spulenkörper (6) derart geformt ist, dass axial sich erstreckende Hohlräume gebildet sind, insbesondere zur Durchleitung von Leitungen (1),
wobei der Spulenkörper (6) aus Stahl gefertigt ist und in Umfangsrichtung verlaufende Vertiefungen (41) aufweist, in welche die jeweiligen Teile der Wicklungen (7) eingelegt sind,
wobei die in einer jeweiligen Vertiefung (41) vorgesehenen axial zueinander benachbarten Teilwicklungen mittels des Spulenkörpers (6) voneinander beabstandet sind,
wobei der Spulenkörper (6) einstückig aus Stahl gefertigt ist,
wobei die Magnete aus mehreren in axialer Richtung hintereinander angeordneten Stücken gefertigt sind, die mit einem jeweiligen Versatz zueinander in Umfangsrichtung angeordnet sind zur Verringerung des Polrastens,
wobei im Stranggussprofil (2) eine Lanze (3) zur Durchleitung eines Mediums durch den Stator an eine nachgeordnete Vorrichtung vorgesehen ist.

2. Linearaktor nach Anspruch 1,
**dadurch gekennzeichnet, dass**
die Magnete Permanentmagnete sind.

3. Linearaktor nach mindestens einem der vorangegangenen Ansprüche,
**dadurch gekennzeichnet, dass**
die Magnete in Umfangsrichtung hintereinander angeordnet sind, insbesondere an der Innenfläche des hohl ausgeführten Läufers (4).

4. Linearaktor nach mindestens einem der vorangegangenen Ansprüche,
**dadurch gekennzeichnet, dass**
das Stranggussprofil (2) an der Innenfläche des Spulenkörpers (6) mit diesem verbunden ist, insbesondere kraftschlüssig, stoffschlüssig und/oder formschlüssig.

5. Linearaktor nach mindestens einem der vorangegangenen Ansprüche,
**dadurch gekennzeichnet, dass**
der Linearaktor als mehrphasiger und/oder mehrpoliger Tauchspulenmotor ausgeführt ist, insbesondere als synchroner Motor.

6. Linearaktor nach mindestens einem der vorangegangenen Ansprüche,
**dadurch gekennzeichnet, dass**
stirnseitig am Läufer (4) ein Flansch vorgesehen ist zur Kraftübertragung an die Last.

7. Linearaktor nach mindestens einem der vorangegangenen Ansprüche,
**dadurch gekennzeichnet, dass**
die Module (20) in axialer Richtung hintereinander angeordnet sind und/oder dicht und/oder kraft- und/oder formschlüssig miteinander verbunden sind.

8. Linearaktor nach mindestens einem der vorangegangenen Ansprüche,
**dadurch gekennzeichnet, dass**
die Magnete gemeinsam als Hohlzylinder aus magnetisierbarem Material ausgeführt sind, welcher entsprechend magnetisiert ist.

9. Linearaktor nach mindestens einem der vorangegangenen Ansprüche,
**dadurch gekennzeichnet, dass**
die Ausnehmungen (5) des Stranggussprofils (2) keine nach dem Stranggießen aufgebrachte Nachbearbeitung aufweisen.

10. Linearaktor nach mindestens einem der vorangegangenen Ansprüche,
**dadurch gekennzeichnet, dass**
der Spulenkörper (6) an seiner Innenseite als Innenzylinder geformt ist.

11. Linearaktor nach mindestens einem der vorangegangenen Ansprüche,
**dadurch gekennzeichnet, dass**
die Hohlräume und Ausnehmungen (5) sich über die axiale Länge des Stranggussprofils (2) erstrecken, insbesondere zumindest auch über die axiale Länge des Stators.

12. Linearaktor nach mindestens einem der vorangegangenen Ansprüche,
**dadurch gekennzeichnet, dass**
der Aktor eine Schnittstelle zum Verbinden einer Transportsicherung aufweist.

13. Linearaktor nach mindestens einem der vorangegangenen Ansprüche,
**dadurch gekennzeichnet, dass**
am Spulenkörper Ringnuten zur Aufnahme der Wicklungen ausgebildet sind,
wobei die Ringnuten in axialer Richtung regelmäßig voneinander beabstandet sind.

## Claims

1. Linear actuator,
comprising a stator and a rotor (4),
wherein the rotor (4) comprises magnets, the magnetisation direction of which is oriented substantially in the axial direction, wherein an angle of inclination is provided,
wherein the angle of inclination has a value between zero and 30°,
wherein the stator comprises at least one module (20),
wherein each module (20) comprises a winding (7) that is attached to a coil member (6) and by means of which a substantially axially oriented magnetic field can be generated, in particular in the region of the magnets,
wherein the stator comprises an extruded profile (2) comprising recesses (5) for conducting coolant,
wherein the outer or inner surface of the extruded profile (2) is moulded together with the coil member (6) such that axially extending cavities are formed, in particular for guiding through lines (1),
wherein the coil member (6) is made of steel and has depressions (41) that extend in the circumferential direction and into which the respective parts of the windings (7) are inserted,
wherein the partial windings provided axially adjacent to one another in the respective depressions (41) are spaced apart from one another by means of the coil member (6),
wherein the coil member (6) is made of steel as a single piece,
wherein the magnets are produced from a plurality of pieces that are arranged one behind the other in the axial direction and so as to be offset from one another in the circumferential direction in order to reduce the cogging torque,
wherein a lance (3) is provided in the extruded profile (2) to conduct a medium through the stator to a downstream device.

2. Linear actuator according to claim 1,
**characterised in that**
the magnets are permanent magnets.

3. Linear actuator according to at least one of the preceding claims,
**characterised in that**
the magnets are arranged one behind the other in the circumferential direction, in particular on the inner face of the rotor (4), which is hollow.

4. Linear actuator according to at least one of the preceding claims,
**characterised in that**
the extruded profile (2) is connected to the coil member (6) on the inner face thereof, in particular is frictionally connected, integrally bonded and/or positively connected thereto.

5. Linear actuator according to at least one of the preceding claims,
**characterised in that**
the linear actuator is designed as a multi-phase and/or multi-pole voice coil motor, in particular as a synchronous motor.

6. Linear actuator according to at least one of the preceding claims,
**characterised in that**
on the end face of the rotor (4), a flange is provided for transmitting force to the load.

7. Linear actuator according to at least one of the preceding claims,
**characterised in that**
the modules (20) are arranged one behind the other in the axial direction and/or are tightly and/or frictionally and/or positively interconnected.

8. Linear actuator according to at least one of the preceding claims,
**characterised in that**
the magnets are together designed as hollow cylinders made of magnetisable material, which is magnetised accordingly.

9. Linear actuator according to at least one of the preceding claims,
**characterised in that**
the recesses (5) in the extruded profile (2) do not comprise any further processing applied after the extrusion.

10. Linear actuator according to at least one of the preceding claims,
**characterised in that**
on its inside, the coil member (6) is moulded as an internal cylinder.

11. Linear actuator according to at least one of the preceding claims,
**characterised in that**
the cavities and recesses (5) extend over the axial length of the extruded profile (2), in particular at least also over the axial length of the stator

12. Linear actuator according to at least one of the preceding claims,
**characterised in that**
the actuator has an interface for connecting a transport protection device.

13. Linear actuator according to at least one of the preceding claims,
**characterised in that**
annular grooves for receiving the windings are formed in the coil member, the annular grooves being at a regular spacing from one another in the axial direction.

## Revendications

1. Actionneur linéaire,
comprenant un stator et un rotor (4),
sachant que le rotor (4) comprend des aimants dont la direction de magnétisation est orientée pour l'essentiel en direction axiale, sachant qu'il est prévu un angle d'inclinaison,
sachant que l'angle d'inclinaison présente une valeur comprise entre zéro et 30°, sachant que le stator comprend au moins un module (20),
sachant que chaque module (20) comprend un enroulement (7) disposé sur un corps de bobine (6), avec lequel on peut produire pour l'essentiel un champ magnétique orienté axialement, en particulier dans la région des aimants,
sachant que le stator comprend un profilé (2) coulé en continu, qui comprend des évidements (5) pour le passage de fluide de refroidissement,
sachant que la surface extérieure ou intérieure du profilé (2) coulé en continu est façonnée conjointement avec le corps de bobine (6) de telle sorte que des espaces creux s'étendant axialement sont formés, en particulier pour le passage de lignes (1),
sachant que le corps de bobine (6) est fabriqué en acier et présente des évidements (41) s'étendant en direction périphérique, dans lesquels sont logées les parties respectives des enroulements (7),
sachant que les enroulements partiels axialement voisins les uns des autres qui sont prévus dans un évidement respectif (41) sont espacés les uns des autres au moyen du corps de bobine (6),
sachant que le corps de bobine (6) est fabriqué d'un seul tenant en acier,
sachant que les aimants sont constitués de plusieurs tronçons disposés les uns à la suite des autres en direction axiale, qui sont disposés avec un décalage respectif les uns par rapport aux autres en direction périphérique afin de réduire la grille de pôles,
sachant qu'il est prévu dans le profilé (2) coulé en continu une lance (3) pour apporter un fluide à travers le stator à un dispositif consécutif.

2. Actionneur linéaire selon la revendication 1, **caractérisé en ce que** les aimants sont des aimants permanents.

3. Actionneur linéaire selon au moins une des revendications précédentes, **caractérisé en ce que** les aimants sont disposés les uns à la suite des autres en direction périphérique, en particulier sur la face intérieure du rotor (4) réalisé creux.

4. Actionneur linéaire selon au moins une des revendications précédentes, **caractérisé en ce que** le profilé (2) coulé en continu est relié au corps de bobine (6) sur la face intérieure de celui-ci, en particulier à force, par liaison de matière et/ou par complémentarité de forme.

5. Actionneur linéaire selon au moins une des revendications précédentes, **caractérisé en ce que** l'actionneur linéaire est réalisé sous la forme d'un moteur à bobine mobile polyphasé et/ou multipolaire, en particulier sous forme de moteur synchrone.

6. Actionneur linéaire selon au moins une des revendications précédentes, **caractérisé en ce qu'**un flasque est prévu du côté frontal sur le rotor (4) pour la transmission de force à la charge.

7. Actionneur linéaire selon au moins une des revendications précédentes, **caractérisé en ce que** les modules (20) sont disposés les uns à la suite des autres en direction axiale et/ou sont reliés entre eux de manière jointive et/ou à force et/ou par complémentarité de forme.

8. Actionneur linéaire selon au moins une des revendications précédentes, **caractérisé en ce que** les aimants sont réalisés conjointement sous forme de cylindre creux en matériau magnétisable, qui est magnétisé d'une manière appropriée.

9. Actionneur linéaire selon au moins une des revendications précédentes, **caractérisé en ce que** les évidements (5) du profilé (2) coulé en continu ne présentent pas d'usinage de finition réalisé après la coulée continue.

10. Actionneur linéaire selon au moins une des revendications précédentes, **caractérisé en ce que** le corps de bobine (6) est réalisé sur son côté intérieur sous forme de cylindre intérieur.

11. Actionneur linéaire selon au moins une des revendications précédentes, **caractérisé en ce que** les espaces creux et les évidements (5) s'étendent sur la longueur axiale du profilé (2) coulé en continu, en particulier au moins aussi sur la longueur axiale du stator.

12. Actionneur linéaire selon au moins une des revendications précédentes, **caractérisé en ce que** l'actionneur présente une interface pour relier une sécurité de transport.

13. Actionneur linéaire selon au moins une des revendications précédentes, **caractérisé en ce que** des rainures annulaires sont configurées sur le corps de bobine pour recevoir les enroulements,
sachant que les rainures annulaires sont régulièrement espacées les unes des autres en direction axiale.
